Europäisches Patentamt

European Patent Office

Office européen des brevets

(19)

(11) Publication number:

**0 259 067**
**A2**

(12) ## EUROPEAN PATENT APPLICATION

(21) Application number: 87307363.9

(51) Int. Cl.⁴: **F16J 15/40**

(22) Date of filing: 20.08.87

(30) Priority: 22.08.86 US 899311

(43) Date of publication of application:
09.03.88 Bulletin 88/10

(84) Designated Contracting States:
CH DE FR GB IT LI NL

(71) Applicant: **Ferrofluidics Corporation**
**40 Simon Street**
**Nashua New Hampshire 03061(US)**

(72) Inventor: **Raj, Kuldip**
**11 Christina Road**
**Merrimack New Hampshire(US)**
Inventor: **Borduz, Lucian**
**53 Great Brook Road**
**Milford New Hampshire(US)**
Inventor: **Gowda, Hanumaiah L.**
**334 Abbott Farm Lane**
**Hudson New Hampshire(US)**

(74) Representative: **Slight, Geoffrey Charles et al**
**Graham Watt & Co. Riverhead**
**Sevenoaks Kent TN13 2BN(GB)**

(54) **High temperature ferrofluid multiple stage seal and method.**

(57) A high temperature, extended life multiple stage ferrofluid seal has permanent magnet means (12) and magnetically permeable pole piece means (14, 16) arranged about a magnetically permeable shaft (24) provided with lands (26) defining a plurality of spaced radial gaps and interstage regions (34) between the surface of the shaft (24) and the pole piece means (14, 16). The radial gaps retain a thermally stable ferrofluid (28) and the stage width to radial gap ratio is selected to be greater than about 30 e.g. 50 to extend the coagulation gel time life of the ferrofluid. The interstage regions (34) are fitted in part with thermoset epoxy resin (32) to reduce the interstage volumes which are otherwise filled with an inert gas to reduce oxidation of the ferrofluid.

FIG. 4.

EP 0 259 067 A2

## HIGH TEMPERATURE FERROFLUID MULTIPLE STAGE SEAL AND METHOD

The present invention relates to high temperature ferrofluid multiple stage seals and to a method of extending the life of ferrofluid multiple stage seals intended to operate at high temperatures.

The current magnetic ferrofluid seals cannot be used at high temperatures without liquid cooling. At high temperatures, the limitation is not the evaporation of ferrofluid resulting in seal failure, but that the ferrofluid congeals or gels and loses its ability to seal. The evaporation rate in a multistage ferrofluid seal is not much of an issue (except for the first stage) due to the presence of a small interstage volume between each pair of adjacent ferrofluid sealed radial gaps tending to retard the ferrofluid evaporation process.

A typical multiple stage vacuum rotary feed-through ferrofluid seal is described in US-A-3,620,584. The multiple stage seal currently in use employs a ferrofluid with the saturation magnetization and viscosity values of 450 gauss and 500cp at 27°C respectively. The ferrofluid, for example, may be either an ester, flurocarbon, hydrocarbon or poly alpha-olefin liquid carrier based ferrofluid. The nominal radial gap of the seal apparatus typically may be 2 mil and the stage width may be 10 mil with the aspect ratio of 5.

Such a multiple stage seal is expected to last for several years. This life objective is achieved by ensuring that the ferrofluid temperature in the seal apparatus does not exceed a defined temperature, say a temperature beyond about 60°C. If the temperature becomes higher than the defined temperature of 60°C, some form of cooling for the seal apparatus becomes necessary. The seal may be used at higher temperatures, but for every 10°C increase in temperature, the life (based on evaporation rate) is roughly reduced by a factor of two until the temperature becomes sufficiently high to reach the ferrofluid congealing temperature, such as 150°C, so that the seal fails due to the fluid congealing.

It has been found that the processes responsible for ferrofluid coagulation are: oxidation and decomposition. By proper selection of carriers and surfactants and by the addition of antioxidants, it is possible to improve the thermal stability of a ferrofluid, thereby extending the seal life. The seal life may also be increased by lowering the saturation magnetization of ferrofluid, such as to about 200 gauss or lower.

It is desirable to improve the ferrofluid seal life of ferrofluid seal apparatuses beyond the selection of the ferrofluid.

To this end, the present invention provides, from one aspect, a high temperature ferrofluid multiple stage seal apparatus which comprises a permanent magnet means to provide a source of magnetic flux; a magnetically permeable pole piece means having a surface and in a magnetic flux relationship with the permanent magnet means; a magnetically permeable shaft having a surface; means to define a plurality of spaced radial gaps and stage widths and one or more interstage volumes between the surface of the said shaft and said pole piece means; and ferrofluid retained in the radial gaps by the magnetic flux to provide a plurality of spaced apart ferrofluid seals about the surface of the shaft, characterized in that the ferrofluid is a thermally stable ferrofluid and each stage width to radial gap ratio is chosen to be sufficient to extend the ferrofluid gel coagulation time at a selected seal operating temperature, thereby to provide a ferrofluid seal apparatus which operates at a high temperature without the necessity of liquid cooling.

Each stage width to radial gap ratio may be selected to be about 50 but usefully, it may also be selected to be lower, e.g. about 30 or 20.

The present invention also provides a method of extending the life of a multiple stage ferrofluid seal apparatus having a plurality of radial gaps containing a thermally stable ferrofluid and at least one stage volume between adjacent radial gaps, which method comprises providing a sufficiently large stage width to radial gap ratio to extend the gel coagulation time of the ferrofluid thereby providing a multiple stage ferrofluid seal apparatus which may operate at temperatures of greater than 60°C without the necessity of liquid cooling.

It has been discovered that a multiple stage ferrofluid seal apparatus may be enhanced in seal life, particularly at high temperatures, by the selection of the proper radial gap and stage geometry. In particular, a multiple stage ferrofluid seal apparatus has been discovered, which seal may operate at temperatures greater than presently available by the selection solely of the ferrofluid, such as for example, multiple stage seals which operate at temperatures greater than about 150°C and up to 200°C or more.

The extended life seal apparatus of the invention employs long stage width, i.e. stage volume, in relation to the radial gap of the seal in order to provide a high ratio of stage width (related to stage volume) to radial gap. This extended high temperature seal life is achieved by employing wide stages e.g. of about 0.060 inch or longer. The radial gap employed, e.g. 0.002 to 0.006 inch, in the seal is not an important parameter provided the radial gap is sufficiently small, as in current practice, to ensure sufficient magnetic flux density in the radial gap for retaining the ferrofluid. Thus, where the current art practices employ in multiple stage seals a ratio stage width to radial gap of about 5, the extended life seals of the invention employ a higher ratio, e.g. 20 or more, rising to 50 or more, to achieve significant order of magnitude seal life extension by extending the ferrofluid gel coagulation time at high temperatures.

It has been discovered that the gel time of ferrofluid at high temperatures depends on the volume to surface area ratio of ferrofluid. A typical result is shown in the table below.

### TABLE

### Ferrofluid gel time as a function of ratio of volume / surface area at 150°C

| | GEL TIME IN HOURS | FERROFLUID VOLUME (cc)/SURFACE AREA (cm) |
|---|---|---|
| 1) | 7.2 | 0.18 |
| 2) | 10.0 | 0.20 |
| 3) | 70 | 1.0 |
| 4) | 200 | 3.0 |
| 5) | 250 | 5.0 |

The experiment was performed at 150°C with different quantities of the same ester-based commercial-type seal ferrofluid in the same size bottle. The bottles were open and exposed to air. At the point of forming a gel, the fluid becomes so thick that it does not pour out of the bottle.

For a typical multiple stage ferrofluid vacuum seal with a 0.5 inch shaft diameter, the fluid quantity under a stage approximates to:

$V = \pi D \delta L$

D = Shaft Diameter (0.5 in)

$\delta$ = Radial Gap (0.002 in)

L = Stage Width (0.010 in)

The surface area of ferrofluid approximates to:

$S = \pi D \delta$

$$V/S = \frac{\pi D \delta L}{\pi D \delta} = L$$

(one surface evaporation)

OR

V/S = L/2 (Two surface evaporation).

In the present case V/S = 0.01 inch or 0.025 cm for one surface

= 0.0125cm for two surfaces

(In magnetic ferrofluid seals, the evaporation takes place from two surfaces).

These calculations show that the ratio of V/S is very small for the current multiple stage feed-through seals resulting from the small stage width. A small stage width causes the ferrofluid to congeal more rapidly. Thus, an increase in stage width can lead to improvements in ferrofluid gel time by orders of magnitude.

It is also desirable for the interstage volumes to be kept at a minimum consistent with magnetic circuit practices to minimize evaporation of the ferrofluid. With a thermally stable ferrofluid, the ultimate seal life will depend on the seal temperature and the stage width, with the longer the stage width the longer the seal life.

The interstage volume may be reduced or minimized by filling the interstage volume with a nonmagnetically permeable or nonmagnetic filler material, such as to the depth of or slightly less than the radial gap. The filler material should be capable of withstanding the operating temperature of the seal and typically may comprise, but is not limited to, a resin or polymer, like a thermoset or cured resin, such as an epoxy, phenolic or other thermoset resin.

The seal apparatus, where operating temperature and seal life is extended, may comprise any ferrofluid seal apparatus having an interstage width and a volume between two radial gaps but particularly, it is a multiple stage ferrofluid seal of the same or similar type described in US-A-3,620,584. The ferrofluid seal apparatus may employ a single permanent magnet source as in US-A-3,620,584 or it may employ multiple magnets. The magnet or magnets used as a source of magnetic flux may be either an axially or radially polarized magnet or magnets.

The ferrofluid employed may vary as desired. However, for a high temperature seal a highly thermally stable ferrofluid should be used to aid in extending seal life. The ferrofluid may include those ferrofluids containing one or more antioxidants and selected surfactants with selected nonvolatile stable liquid carriers, such as but not limited to: fluorocarbons, esters, hydrocarbons, poly alpha-olefin, fluorosilicones, polyphenyl ethers, and other nonvolatile thermally-stable liquid carriers.

It is also preferred that the magnetization value of the ferrofluid be low to aid in extending seal life, such as for example, about 200 gauss or lower. For a high temperature multiple stage ferrofluid seal a highly thermal stable flurocarbon-based ferrofluid, with a magnetization value of about 200 or lower in a seal with a stage width of 0.060 inch or more and a radial gap of about 0.002 inch, provides for a seal operating up to about 200°C without the need for external cooling of the seal. In addition, optionally, the gelling of the ferrofluid may be reduced due to oxidation by back filling the interstage volume with a nonoxidizing atmosphere, such as an inert gas like nitrogen or argon to minimize the oxidative process leading to gelling of the ferrofluid.

Some ways of carrying out the invention will now be described in detail by way of example with reference to drawings, Figs. 1, 3 and 4 of which show specific embodiments of seal according to the invention.

## BRIEF DESCRIPTION OF THE DRAWINGS

FIG. 1 is a schematic, illustrative, sectional view of a multiple stage ferrofluid seal of the invention;

FIG. 2 is an enlarged, schematic illustrative sectional view of a prior art multiple stage seal illustrating the stage width to radial gap relationship;

FIG. 3 is an enlarged, schematic illustrative sectional view of a right hand portion of the Fig. 1 seal illustrating the stage width to radial gap relationship; and

FIG. 4 is a view corresponding to Fig. 3 of another embodiment of the seal of Fig. 3 in accordance with the invention.

## DETAILED DESCRIPTION OF THE ILLUSTRATED EMBODIMENTS

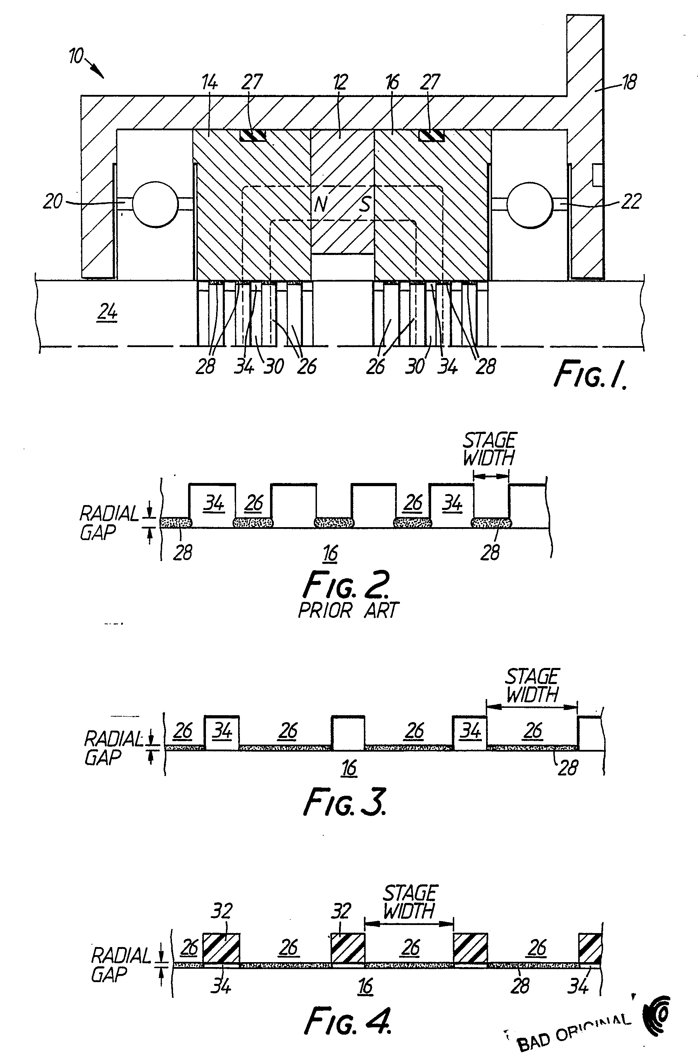

Fig. 1 shows a multiple stage ferrofluid seal apparatus 10 having a single permanent magnet 12, pole pieces 14 and 16, a non-magnetically permeable housing 18 which includes ball bearings 20 and 22 all about a magnetically permeable shaft 24, the pole pieces sealed to the interior of the housing 18 by seals 27. The shaft 24 has a plurality of lands 26 which form a plurality of radial gaps of about 2 mils with the opposing surface of the pole pieces 14 and 16. The edges or lands 26 retain a thermally stable fluorcarbon-based ferrofluid 28 in the gaps to form a ferrofluid seal about the surface of the shaft 24. The lands 26 form a plurality of stages therebeteween to define a plurality of interstage regions 34 between the lands 26 and the ferrofluid seals 28. The length of the the stages each is about 60 mils to provide a stage width to radial gap ratio of 30. The dotted lines illustrate the magnetic flux path of the seal.

Fig. 2 illustrates the relationship between stage width and radial gap in the current art of multiple stage seals of the type of Fig. 1, wherein, for example, the stage width is 10 mils and the radial gap is 2 mils, for a low ratio of 5.

Fig. 3 illustrates more particularly the relationship between the stage width and radial gap in the seal of Fig. 1, wherein the ratio of the stage width to radial gap is 30.

Fig. 4 illustrates another embodiment wherein the interstage regions 34 have in part been filled in with a thermoset epoxy resin 32, and in addition an inert gas has been introduced into the remaining volume of the interstage regions 34 to reduce oxidation of the ferrofluid 28.

There has been described a high temperature extended life multiple stage ferrofluid seal apparatus which is particularly adapted to seal a shaft extending between a first, for example, high pressure, e.g. atmospheric pressure, and a low pressure, e.g. vacuum, where high temperature seal operation occurs.

## Claims

1. A high temperature ferrofluid multiple stage seal apparatus which comprises:

a) a permanent magnet means to provide a source of magnetic flux;

b) a magnetically permeable pole piece means having a surface and in a magnetic flux relationship with the permanent magnet means;

c) a magnetically permeable shaft having a surface;

d) means to define a plurality of spaced radial gaps and stage widths and one or more interstage volumes between the surface of the said shaft and said pole piece means; and

e) ferrofluid retained in the radial gaps by the magnetic flux to provide a plurality of spaced apart ferrofluid seals about the surface of the shaft, characterized in that the ferrofluid is a thermally stable ferrofluid; and

each stage width to radial gap ratio is chosen to be sufficient to extend the ferrofluid gel coagulation time at a selected seal operating temperature, thereby to provide a ferrofluid seal apparatus which operates at a high temperature without the necessity of liquid cooling.

2. A seal apparatus as claimed in claim 1 wherein the stage width is about 0.060 inch or more.

3. A seal apparatus as claimed in claim 1 or 2 wherein each radial gap is about 0.002 inch or less.

4. A seal apparatus as claimed in any preceding claim wherein the ferrofluid comprises a nonvolatile ferrofluid containing an antioxidant additive.

5. A seal apparatus as claimed in any preceding claim wherein the ferrofluid comprises a fluorocarbon-based ferrofluid.

6. A seal apparatus as claimed in any preceding claim which is characterized by operating at a temperature of 150°C or more without liquid cooling.

7. A seal apparatus as claimed in any preceding claim which includes a non-magnetically permeable high temperature filler material, preferably a thermoset resin, and/or an inert gas means in one or more of said interstage volumes to reduce the stage volume so as to reduce the evaporation of the ferrofluid and/or to reduce the oxidation of the ferrofluid.

8. A seal apparatus as claimed in any preceding claim wherein the ferrofluid has a magnetization saturation of about 200 gauss or less.

9. A seal apparatus as claimed in any preceding claim wherein the ferrofluid comprises a liquid carrier selected from the group consisting of: a fluorocarbon; a fluorosilicone; and a polyphenyl ether.

10. A seal apparatus as claimed in any preceding claim which includes a high pressure environment and a low atmospheric pressure environment, the seal apparatus providing a seal to the shaft extending between the high and low pressure environment.

11. A seal apparatus as claimed in any preceding claim wherein each stage width to radial gap ratio is selected to be about 50.

12. A method of extending the life of a multiple stage ferrofluid seal apparatus having a plurality of radial gaps containing a thermally stable ferrofluid and at least one stage volume between adjacent radial gaps, which method comprises providing a sufficiently large stage width to radial gap ratio to extend the gel coagulation time of the ferrofluid thereby providing a multiple stage ferrofluid seal apparatus which may operate at temperatures of greater than 60°C without the necessity of liquid cooling.

13. A method as claimed in claim 12 wherein the stage width to radial gap ratio provided is about 50.

FIG. 1.

FIG. 2.
PRIOR ART

FIG. 3.

FIG. 4.

BAD ORIGINAL